Europäisches Patentamt

European Patent Office

Office européen des brevets

(19)

(11) **EP 1 294 080 A2**

(12) **EUROPÄISCHE PATENTANMELDUNG**

(43) Veröffentlichungstag:
**19.03.2003 Patentblatt 2003/12**

(51) Int Cl.⁷: **H02K 11/02**

(21) Anmeldenummer: **02018861.1**

(22) Anmeldetag: **23.08.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **07.09.2001 DE 10144040
16.05.2002 DE 10222243**

(71) Anmelder: **Sintertechnik GmbH
91362 Pretzfeld (DE)**

(72) Erfinder:
• **Langguth, Jochen, Dr.-Ing.
91362 Pretzfeld (DE)**

• **Korsuchin, Valerij, Dipl.-Ing.
90765 Fürth (DE)**
• **Langguth, Kathrin, Dr.-Ing.
91362 Pretzfeld (DE)**
• **Sax, Michael, Dipl.Ing.
52070 Aachen (DE)**

(74) Vertreter: **Gassner, Wolfgang, Dr.
Patentanwalt
Nägelsbachstrasse 49a
91052 Erlangen (DE)**

(54) **Kommutator für einen Elektrokleinmotor**

(57) Die Erfindung betrifft eine Kommutatoranordnung für einen Elektrokleinmotor, mit einer mehrere Kondensatorelemente aufweisenden Kondensator-Ringscheibe, wobei die Kondensator-Ringscheibe aus einer dielektrischen ersten Ringscheibe (RS) gebildet ist, auf deren Oberseite mehrere sektorenförmig ausgebildete Elektrodenschichten (6) aufgebracht sind, wobei jede der Elektrodenschichten (6) jeweils mit einer Kommutatorlamelle (13) elektrisch leitend verbunden ist, und wobei auf einer der Oberseite gegenüberliegenden Unterseite Gegenelektroden der Kondensatorelemente vorgesehen sind. Zur Verbesserung der Entstöreigenschaften wird erfindungsgemäß vorgeschlagen, dass auf der Unterseite eine einzige die Elektrodenschicht (6) weit gehend flächendeckend unterlagernde Gegenelektrodenschicht (4) vorgesehen ist, so dass die Gegenelektroden sämtlicher Kondensatorelemente auf demselben Potenzial liegen.

Fig. 2

**Beschreibung**

Die Erfindung betrifft eine Kommutatoranordnung für einen Elektrokleinmotor nach dem Oberbegriff des Anspruchs 1.

Bei Elektrokleinmotoren, insbesondere bei Gleichstrommotoren, erfolgt die Stromzuführung über Schleifkontakte. Die Schleifkontakte sind z.B. aus Kohle- oder Edelmetallbürsten gebildet, die gegen auf einer Kommutatorhülse aufgenommene Kommutatorlamellen drücken. Bei der Stromwendung oder Kommutierung kommt es zur Funkenbildung. Eine solche Funkenbildung ist unerwünscht. Sie verursacht eine Erosion insbesondere der Schleifkontakte sowie eine elektromagnetische Störstrahlung.

Aus der DE 199 34 685 A1 ist es bekannt, zur Unterdrückung der Funkenbildung eine Ringscheibe mit kapazitiven Eigenschaften vorzusehen. Diese so genannte Kondensator- oder CLL-Scheibe ist aus einer halbleitenden Keramik hergestellt, deren Oberfläche eine Sperrschicht aufweist. Auf der Sperrschicht ist pro Teilwicklung bzw. pro Kollektorlamelle eine Kontaktfläche aufgebracht. Die Größe der Kontaktfläche definiert eine Kapazität. Die Kontaktfläche ist elektrisch leitend verbunden mit der ihr zugeordneten Kommutatorlamelle. Das Innere der Keramik ist üblicherweise n- oder p-halbleitend und wird durch eine isolierende Sperrschicht von den äußeren Kontaktflächen getrennt. Durch die Dicke d der Sperrschicht wird die Kapazität der einzelnen Kontaktflächen bestimmt gemäß $C = \varepsilon_0\, \varepsilon_r\, A/d$; im Inneren der Keramik kann durch die halbleitenden Eigenschaften ständig ein Ladungsausgleich erfolgen.

Die nach dem Stand der Technik bekannten CLL-Scheiben sind mechanisch nicht besonders fest. Sie müssen in einer relativ großen Dicke von etwa 1,0 bis 1,5 mm gefertigt werden. Üblicherweise ist zur Aufnahme einer solchen CLL-Scheibe eine an der Welle des Elektrokleinmotors angespritzte Kunststoffträgerscheibe vorgesehen. Das erhöht weiter die Dicke der Kommutatorscheibenanordnung auf etwa 2,5 bis 3,5 mm. Insbesondere bei Motoren mit eisenloser Wicklung, z.B. Glockenwicklungsmotoren, muss der Permanentmagnet in seiner Länge entsprechend begrenzt werden bzw. der Motor muss in seiner Gesamtlänge vergrößert werden. Das Leistungspotenzial des Elektrokleinmotors kann nicht vollständig ausgeschöpft werden. Schließlich sind die bekannten CLL-Scheiben in ihrer.Kapazität beschränkt. Außerdem können die Kapazität und der Reihenwiderstand der Kapazität nicht unabhängig voneinander eingestellt werden. Bei bestimmten Anwendungen oder Betriebsweisen kann die unerwünschte Funkenbildung nicht ausreichend unterdrückt werden.

Zur Erhöhung der Kapazität ist es aus der DE 199 34 685 A1 des Weiteren bekannt, auf einer aus einem Leiterplattenmaterial hergestellten Trägerscheibe mittels SMD-Technik diskrete Kondensatorelemente als SMD-Bauelemente aufzubringen. Die Kondensatorelemente werden zwischen zwei einander benachbarten Kommutatorlamellen, ähnlich wie bei der CLL-Scheibe, hintereinander, d.h. in Reihe, geschaltet. Die vorgeschlagene Kommutatorscheibe ist ebenfalls relativ dick ausgebildet. Ihre Herstellung ist aufwändig.

Aus der DE-OS 1 938 229 ist eine Entstöreinrichtung für elektrische Kleinstmotoren bekannt. Dabei bestehen die Entstörkondensatoren aus in Form einer Ringscheibe ausgebildeten Sperrschicht-Kondensatoren.

Die gattungsgemäße EP 0 551 740 B1 beschreibt einen elektrischen Kleinstmotor, bei dem die Kondensatoren ebenfalls in Form einer Ringscheibe ausgebildet sind. Die Ringscheibe enthält hier mehrere Multi-Layer-Kondensatoren, die untereinander in Reihe geschaltet sind. Die Kondensatoren sind außerdem parallel zu den durch die Motorwicklung gebildeten Induktivitäten geschaltet.

Aufgabe der Erfindung ist es, einen alternativen Kommutator für Elektrokleinmotoren anzugeben, der eine zuverlässige Funkenunterdrückung gewährleistet.

Diese Aufgabe wird durch die Merkmale des Anspruchs 1 gelöst. Zweckmäßige Ausgestaltungen ergeben sich aus den Merkmalen der Ansprüche 2 bis 18.

Nach Maßgabe der Erfindung ist vorgesehen, dass auf der Unterseite eine einzige die Elektrodenschichten weitgehend flächendeckend unterlagernde Gegenelektrodenschicht vorgesehen ist, so dass die Gegenelektroden sämtlicher Kondensatorelemente auf demselben Potenzial liegen. - Damit wird in vorteilhafter Weise erreicht, dass zwischen den Gegenelektronen ständig ein Ladungsausgleich erfolgt. Es kann nicht zum Aufbau unerwünschter Ladungsunterschiede der Kondensatorelemente kommen. Die Kapazitäten und deren Reihenwiderstände sind voneinander entkoppelt und damit beliebig einstellbar. Es wird eine besonders effektive, gleich bleibende und zuverlässige Funkenunterdrückung gewährleistet.

Ein "Kondensatorelement" besteht aus einer Elektrode und einer Gegenelektrode, die durch eine dielektrische Schicht voneinander getrennt sind. Nach dem Gegenstand der Erfindung wird die dielektrische Schicht durch eine erste Ringscheibe gebildet. Unter dem Begriff "Gegenelektrode" wird ein auf der Unterseite befindlicher Flächenabschnitt der ersten Ringscheibe verstanden, der einer auf der Oberseite vorgesehenen Elektrodenschicht gegenüberliegt. Auf der Elektrode befindet sich die Elektrodenschicht. Es handelt sich dabei um eine elektrisch leitfähige Schicht, die kontaktierbar ist. Auch bei der Gegenelektrodenschicht handelt es sich um eine elektrisch leitfähige Schicht, die ebenfalls kontaktierbar sein kann. Unter dem Begriff "Kondensator-Ringscheibe" wird eine erste Ringscheibe verstanden, die an der Oberseite mit mehreren Elektrodenschichten und an der Unterseite mit einer Gegenelektrodenschicht versehen ist.

Nach einer vorteilhaften Ausgestaltung ist vorgesehen, dass eine Mehrzahl von Kondensator-Ringscheiben unter Zwischenschaltung jeweils einer dielektrischen Schicht nach Art eines Multi-Layer-Kondensators übereinander laminiert sind. Damit können auf einfache Weise pro Kommutatorlamelle mehrere parallel geschaltete Kondensatorelemente realisiert werden, die im folgenden als "kapazitives Element" bezeichnet werden. Solche kapazitiven Elemente ermöglichen die Bereitstellung besonders hoher Kapazitäten.

Bei n übereinanderliegenden Kondensator-Ringscheiben können zwischen zwei benachbarten Kommutatorlamellen n Kapazitäten in Parallelschaltung gebildet werden. Das ermöglicht die Schaffung besonders hoher Kapazitäten bei deutlich reduzierter Dicke der Kommutatorscheibe. Die Stapelung der Kondensator-Ringscheiben ermöglicht in besonders kompakter Form und auf einfache Weise die Herstellung parallel geschalteter Kondensatorelemente. Für die Parallelschaltung von Kondensatoren gilt bekanntlich die folgende Beziehung:

$$C_{Ges.} = C_1 + C_2 + ... + C_n$$

Es können selbst durch eine geringe Kapazität aufweisende Kondensatorelemente in Parallelschaltung hohe Kapazitäten erreicht werden.

Bei dem dielektrischen Material handelt es sich um herkömmliches dielektrisches Material zur Herstellung von Multi-Layer-Kondensatoren, z.B. eine aus Bariumtitanat, Strontiumtitanat oder anderen Kondensatorkeramiken mit hoher Dielektrizitätskonstante und Durchschlagsfestigkeit, hergestellte Keramik.

Vorteilhafterweise sind die durch die übereinanderliegenden Elektrodenschichten gebildeten Kondensatorelemente zur Bildung eines kapazitiven Elements miteinander kontaktiert und jeweils mit einer Kommutatorlamelle verbunden. Dabei sind die Kondensator-Ringscheiben vorteilhafterweise so übereinander laminiert, dass die Elektrodenschichten im Wesentlichen dekkungsgleich übereinander liegen, das vereinfacht deren Kontaktierung. Die übereinanderliegenden Elektrodenschichten können an einer äußeren Umfangsfläche der ersten Ringscheiben miteinander kontaktiert sein.

Nach einer weiteren Ausgestaltung ist vorgesehen, dass die Gegenelektrodenschicht kreisförmig ausgebildet ist und sich bis zu einem Innenumfang der ersten Ringscheibe erstreckt. Das ermöglicht es, bei einem vielschichtigen Aufbau auch die Gegenelektrodenschichten miteinander zu kontaktieren, so dass sämtliche Gegenelektrodenschichten auf demselben Potenzial liegen.

Eine elektrische Verbindung zwischen den übereinanderliegenden Ringscheiben kann entweder durch eine die Ringscheibe/n durchdringende Durchkontaktierung oder durch eine über den Außen- und/oder Innenumfang geführte elektrische Verbindung hergestellt sein. Die über den Außenumfang geführte elektrische Verbindung kann sich zweckmäßigerweise in dort vorgesehenen Ausnehmungen befinden. Es wird ein Schutz vor mechanischer Beschädigung gewährleistet.

Die Elektroden- und Gegenelektrodenschichten, Durchkontaktierungen und/oder über den Außen- und/oder Innenumfang geführte elektrisch leitfähige Verbindungen können z.B. durch Auftragen elektrisch leitfähiger Pasten und nachfolgendes Einbrennen hergestellt werden. Sie können aber auch z.B. aus Leitpaste, Leitkleber und dgl. gebildet sein.

Nach einer weiteren Ausgestaltung ist.vorgesehen, dass die Gegenelektrodenschicht als Widerstandsschicht mit einem Widerstand im Bereich von 0,1 Ω bis 1 kΩ ausgebildet ist. Das ermöglicht auf einfache Weise die Realisierung einer einfachen RC-Entstörschaltung.

Weiterhin können den Kondensatorelementen oder kapazitiven Elementen in Reihe auch mindestens eine Induktivität voroder nachgeschaltet sein. Es kann eine einzige Induktivität vorgesehen sein. Es ist aber auch möglich, dass jedem Kondensatorelement oder jedem kapazitiven Element in Reihe mindestens eine diskrete Induktivität voroder nachgeschaltet ist. Die diskreten Induktivitäten können aber auch parallel zu den Kondensatorelementen geschaltet sein. - Es kann eine aus einem hochpermeablen Magnetwerkstoff hergestellte zweite Ringscheibe vorgesehen sein, bei der jede der Induktivitäten durch eine darauf aufgebrachte leitfähige Struktur gebildet ist, und wobei die Kondensatorelemente oder kapazitiven Elemente jeweils mit einer der Induktivitäten elektrisch leitend verbunden sind. Des Weiteren ist es möglich, dass jedem Kondensatorelement oder jedem kapazitiven Element in Reihe mindestens ein Widerstand vor- oder nachgeschaltet ist. Bei dem Widerstand kann es sich um einen Widerstand mit einer linearen U/I-Kennlinie handeln. Es kann aber auch sein, dass der Widerstand eine nichtlineare U/I-Kennlinie aufweist. Die Widerstände können einstückig in Form einer dritten Ringscheibe oder in Form einer weiteren Widerstandsschicht ausgebildet sein. Die Widerstandsschicht kann z.B. auf eine der Ringscheiben oder auf die Elektrodenschichten oder auf die Gegenelektrodenschicht aufgedruckt sein.

Die dritte Ringscheibe kann z.B. aus einem elektrokeramischen Material mit Varistoreigenschaften hergestellt sein. Ein solches Material ermöglicht die Ableitung von Spannungsspitzen und damit den Schutz von Bauelementen, die der Ansteuerung des Elektrokleinmotors dienen. Geeignete Materialien sind bekannte elektrokeramische Zusammensetzungen (z.B. auf der Basis von dotierten Mischtitanaten aus den Elementen der II. Hauptgruppe oder dotiertem

SrTiO$_3$ oder dotiertem ZnO).

Die zweite und/oder dritte Ringscheibe bzw. Widerstandsschicht können mit der/den ersten Kondensator-Ringscheibe/n ein Laminat bilden.

Es kann ferner eine aus Keramik hergestellte Trägerscheibe zur Aufnahme der Kondensator-Ringscheibe bzw. des Laminats vorgesehen sein. Damit wird die mechanische Festigkeit der vorgeschlagenen Kommutatoranordnung erhöht. Die Trägerscheibe ist zweckmäßigerweise aus einer mechanisch besonders festen Keramik hergestellt. Sie kann z.B. aus Steatit, Cordierit, Elektroporzellan, aus oxidkeramischen Werkstoffen, z.B. ZrO$_2$, welches mit MgO, CaO, CeO$_2$ oder Y$_2$O$_3$ stabilisiert sein kann, oder Al$_2$O$_3$, aus hochfesten Elektrokeramiken, oder z.B. SiC, Si$_3$N$_4$, Dispersionskeramiken und dgl., hergestellt sein.

Zweckmäßigerweise ist ein Durchmesser eines zentralen Durchbruchs der Ringscheiben höchsten doppelt so groß wie ein Durchmesser einer Welle des Elektrokleinmotors. Die Ringscheiben erstrecken sich im montierten Zustand also bis in die unmittelbare Nähe der Welle. Üblicherweise ist der Durchmesser des Durchbruchs nur wenige 1/10tel mm größer gewählt als der Durchmesser der Welle. In Abkehr vom Stand der Technik wird ein bisher zwischen der Ringscheibe und der Welle verbliebener Ringspalt mit dem jeweiligen keramischen Material ausgefüllt. Es ergibt sich durch den Gewinn an Fläche eine Steigerung der Kapazität gemäß der Beziehung C = $\varepsilon_0$ $\varepsilon_r$ A/d. So können die Eigenschaften der Kommutatoranordnung verbessert oder ergänzt werden.

Nach einer weiteren vorteilhaften Ausgestaltung ist vorgesehen, dass die Kondensator-Ringscheibe/n bzw. das Laminat mit einer die Kommutatorlamellen tragenden Kommutatorhülse verbunden ist. Die Kommutatorhülse kann z.B. auf die Kondensator-Ringscheibe/n bzw. das Laminat montiert sein. Es kann aber auch sein, dass die Kondensator-Ringscheibe bzw. das Laminat in Form eines Hohl-Zylinders ausgebildet ist. In diesem Fall können die Kommutatorlamellen die Kondensator-Ringscheibe/n bzw. das Laminat umgeben. Die vorgeschlagene Entstörvorrichtung befindet sich in diesem Fall also innerhalb des Kommutators. Dabei ist zu beachten, dass die Kondensator-Ringscheibe/n bzw. das Laminat und die Kommutatorlamellen so miteinander verbunden werden, dass Unterschiede in den thermischen Ausdehnungskoeffizienten kompensierbar sind. Diese Anordnung ist besonders platzsparend.

Die Ringscheiben können auch bei Vorliegen unterschiedlicher elektrischer Eigenschaften in beliebiger Reihenfolge übereinander angeordnet werden. Die Anordnung richtet sich insbesondere nach der Anzahl und der Art der verwendeten Ringscheiben. Es ist auch möglich, mehrere Ringscheiben innerhalb einer Ebene ineinanderzulegen: Eine Ringscheibe mit einem relativ kleinen Außendurchmesser kann in das Loch einer Ringscheibe gelegt werden, deren Lochdurchmesser etwas größer ist als der Außendurchmesser der kleinen Ringscheibe.

Eine.der Kommutatorhülse zugewandte oberste Oberseite einer Ringscheibe kann mit einer elektrisch isolierten Schicht überdeckt sein. Zweckmäßigerweise ragt ein von jeder der Kontaktlamellen sich erstreckender Kontaktabschnitt in eine an der obersten Oberseite einer Ringscheibe vorgesehene Ausnehmung und ist mit einer der Elektrodenschichten verbunden. Die vorerwähnten Merkmale dienen der Verhinderung von Kurzschlüssen. Die Dicke der Kommutatoranordnung kann reduziert werden.

Nach einem weiteren vorteilhaften Ausgestaltungsmerkmal ist vorgesehen, dass die Ringscheiben mittels einer aus einem Polymer, vorzugsweise einer Kunststofffolie, oder Metall hergestellten Schicht verbunden sind. Insbesondere die vorgeschlagene Sandwich-Struktur, bestehend aus "spröden" keramischen Ringscheiben und dazwischen liegenden vergleichsweise elastischen Polymerlagen, trägt zu einer erheblichen Erhöhung der mechanischen Festigkeit der vorgeschlagenen Kommutatorscheibe bei. Eventuell vorhandene unterschiedliche thermische Ausdehnungskoeffizienten der Ringscheiben können bei Vorsehen von aus einem Polymer hergestellten Zwischenlagen kompensiert werden. Bei dem Polymer kann es sich um einen geeigneten Klebstoff, eine beidseitig klebende Kunststofffolie, Silikon oder dgl. handeln.

Bei Elektrokleinmotoren mit hoher Leistung und hohem Drehmoment kann zur Herstellung einer ausreichenden kraftschlüssigen Verbindung der Kollektorplatte mit der Welle z.B. eine metallische Hülse auf der Welle vorgesehen sein. Die Hülse kann auf die Welle z.B. aufgeschrumpft, geklebt oder gelötet sein. Anschließend kann die Kommutatorscheibe kraftschlüssig mit der Hülse verbunden werden. Die Kommutatorscheibe kann z.B. auf die Hülse aufgeschrumpft oder mit der Hülse verlötet oder verklebt werden. Wegen der durch die Hülse bereitgestellten vergrößerten Mantelfläche kann eine besonders feste Verbindung der Kommutatorscheibe mit der Welle erreicht werden.

Die erfindungsgemäße Kommutatoranordnung kann bei Eisenkernmotoren ebenso Anwendung finden wie bei Elektrokleinmotoren mit Glockenwicklung.

Nach einem weiteren Ausgestaltungsmerkmal ist ein Kontaktabschnitt der Ringscheibe/n oder sind die bis zum Innenumfang sich erstreckenden Gegenelektrodenschichten elektrisch leitend mit der aus einem elektrisch leitfähigen Material hergestellten Welle verbunden. Die Welle ist zweckmäßigerweise aus Metall gebildet. Die Welle kann aber auch aus einem isolierenden Material, z.B. aus Keramik, hergestellt sein. Die elektrisch leitfähige Verbindung kann z.B. durch ein Lot, Leitkleber oder Leitsilber hergestellt sein.

Die Erfindung betrifft ferner einen Elektrokleinmotor mit einer Welle und einer darauf montierten erfindungsgemäßen Kommutatoranordnung.

Nachfolgend werden Ausführungsbeispiele der Erfindung anhand der Zeichnungen näher erläutert. Es zeigen:

Fig. 1          ein schematisches Ersatzschaltbild eines Kommutators nach dem Stand der Technik,

Fig. 2          ein schematisches Ersatzschaltbild einer ersten erfindungsgemäßen Kommutatoranordnung,

Fig. 3          ein schematisches Ersatzschaltbild einer zweiten erfindungsgemäßen Kommutatoranordnung;

Fig. 4          eine Draufsicht auf eine Kondensator-Ringscheibe,

Fig. 5          eine schematische Teilquerschnittsansicht durch eine erste Kommutatoranordnung,

Fig. 6a, 6b     eine Unter- und Draufsicht nach Fig. 5,

Fig. 7          eine schematische Querschnittsansicht einer zweiten Kommutatoranordnung und

Fig. 8          eine schematische Querschnittsansicht einer dritten Kommutatoranordnung.

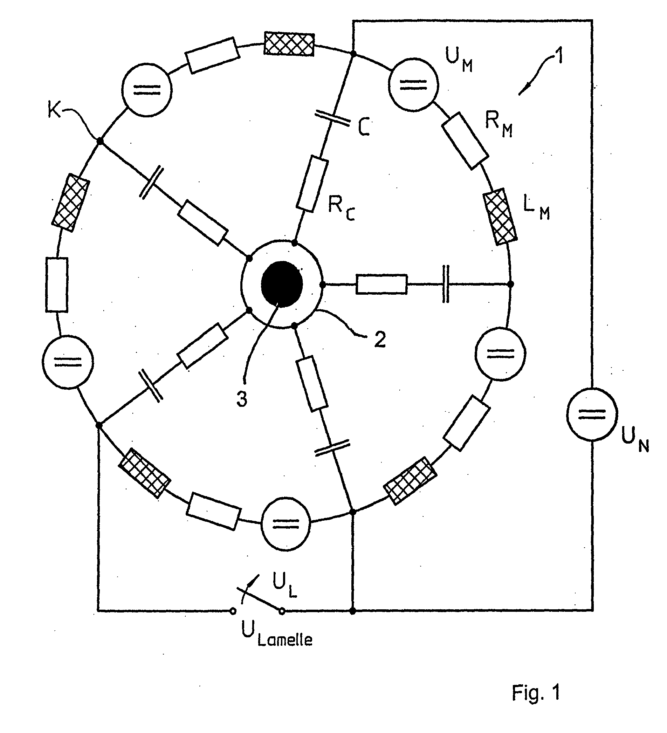

Fig. 1 zeigt ein Ersatzschaltbild einer herkömmlichen CLL-Scheibe. Die Kapazitäten bzw. Kondensatorelemente sind mit C, der ohmsche Widerstand des halbleitenden Materials mit $R_c$ bezeichnet. Eine Motorteilwicklung 1 weist eine elektromagnetische Kapazität $U_M$, einen Wicklungswiderstand $R_M$ und eine Motorinduktivität $L_M$ auf. Die Kondensatorelemente C sind über das im Inneren der CLL-Scheibe befindliche n- oder p-halbleitende Material leitend verbunden. Die entsprechende Ringverbindung ist mit dem Bezugszeichen 2 bezeichnet. Mit $U_N$ ist eine Motornennspannung, mit $U_L$ eine Lamellenspannung und mit K die Kontaktpunkte der Kommutatorlamellen mit den Teilwicklungen und den Kontaktflächen bezeichnet. Mit 3 ist eine Welle bezeichnet.

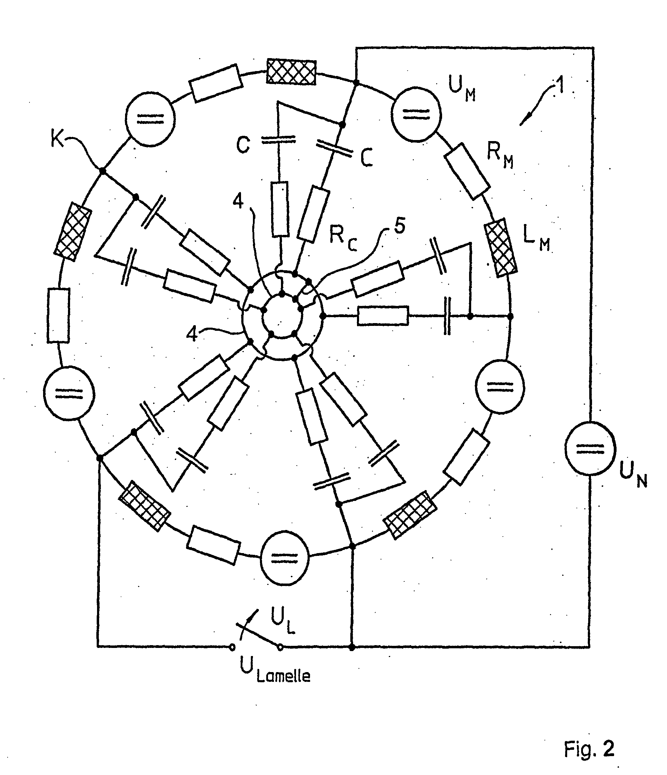

Fig. 2 zeigt das Ersatzschaltbild einer erfindungsgemäßen Anordnung. Jeder der Kontaktpunkte K der Kommutatorlamellen ist mit den Elektroden parallel geschalteter Kondensatorelemente C verbunden. Die Gegenelektroden der Kondensatorelemente C sind über gemeinsame Gegenelektrodenschichten 4 miteinander verbunden. Die Gegenelektrodenschichten 4 können über eine Brücke 5 miteinander elektrisch leitend verbunden sein. Die Brücke 5 kann durch die Welle 3 gebildet sein.

Zwischen zwei benachbarten Kontaktpunkten K sind hier vier Kondensatorelemente C geschaltet, wobei jeweils zwei Kondensatorelemente C parallel geschaltet sind. Durch die Parallelschaltung jeweils zweier Kondensatorelemente C kann die Gesamtkapazität zwischen den beiden Kontaktpunkten K drastisch erhöht werden. Bei einer Parallelschaltung von Kondensatorelementen C entspricht die Gesamtkapazität der Summe der Einzelkapazitäten. Eine solche Parallelschaltung kann z.B. durch Stapeln realisiert werden. Beim Stapeln von n Kondensator-Ringscheiben können n Kondensatorelemente C parallel geschaltet werden.

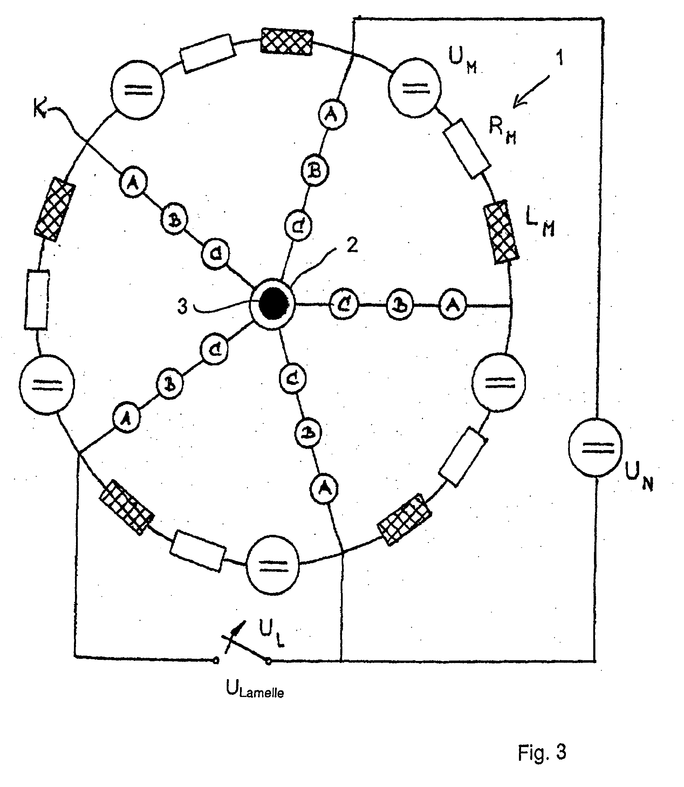

Fig. 3 zeigt ein Ersatzschaltbild einer weiteren erfindungsgemäßen Anordnung. Die mit dem Bezugszeichen A, B, C bezeichneten Bauelemente können in beliebiger Reihenfolge angeordnet sein. Mit "A" ist eine Induktivität, mit "B" ein ohmscher Widerstand oder ein Widerstand mit nicht nichtlinearer U/I-Kennlinie und mit "C" eine Kapazität bezeichnet. Die vorgeschlagene Schaltung, nämlich das Vorsehen einer Kapazität C und einer in Reihe dazu geschalteten Induktivität A zwischen einer Kommutatorlamelle und einer gemeinsamen Ringverbindung, die durch die Gegenelektrodenschicht 4 gebildet sein kann, kann auch Gegenstand einer gesonderten Erfindung sein. Eine vorteilhafte Ausgestaltung besteht bei dieser Schaltung im Vorsehen eines zusätzlichen in Reihe geschalteten Widerstands, welcher eine nichtlineare U/I-Kennlinie aufweisen kann. Bei den verwendeten Kapazitäten C kann es sich um Multi-Layer-Kondensatoren in Ringscheibenanordnung handeln.

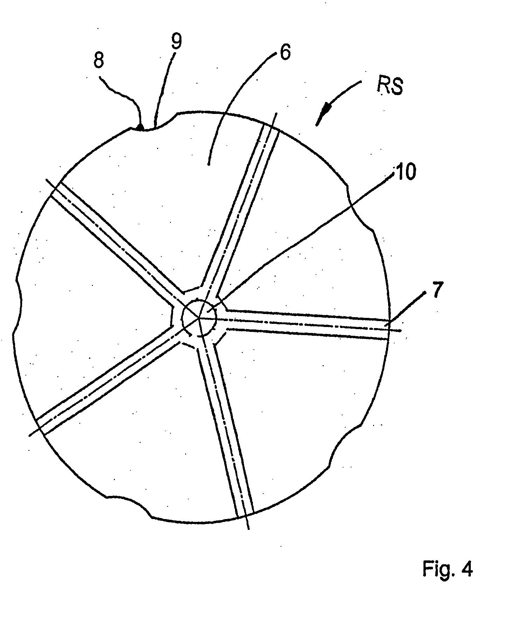

Fig. 4 zeigt eine Draufsicht auf eine Oberseite einer ersten Ringscheibe RS. Die erste Ringscheibe ist aus einem dielektrischen keramischen Material, z.B. Bariumtitanat hergestellt. Mit dem Bezugszeichen 6 sind sektorenförmig ausgebildete Elektrodenschichten bezeichnet. Es handelt sich dabei um auf die erste Ringscheibe RS aufgedruckte leitfähige Pasten, welche eingebrannt sind. Die Elektrodenschichten 6 sind durch elektrisch isolierende Streifen 7 voneinander getrennt. Mit 8 sind Leiterbahnen bezeichnet, die an am Außenumfang der ersten Ringscheibe vorgesehenen rundlichen Ausnehmungen 9 verlaufen. Die Leiterbahnen 8 dienen bei übereinander gestapelten ersten Ringscheiben RS zur Kontaktierung der Elektrodenschichten 6. Ein zentraler Durchbruch 10 der ersten Ringscheibe RS weist einen Durchmesser auf, der zweckmäßigerweise höchstens doppelt so groß ist wie der Durchmesser der Welle 3. Zweckmäßigerweise ist der Durchmesser des Durchbruchs 10 nur wenig größer als der Durchmesser der Welle 3. Es ist auch möglich, das der Durchmesser des Durchbruchs 10 kleiner als der Durchmesser der Welle 3 ist. Die Montage der Ringscheibe RS auf der Welle 3 kann mittels Kleben, Pressen, Klemmen, Aufschrumpfen oder Löten erfolgen.

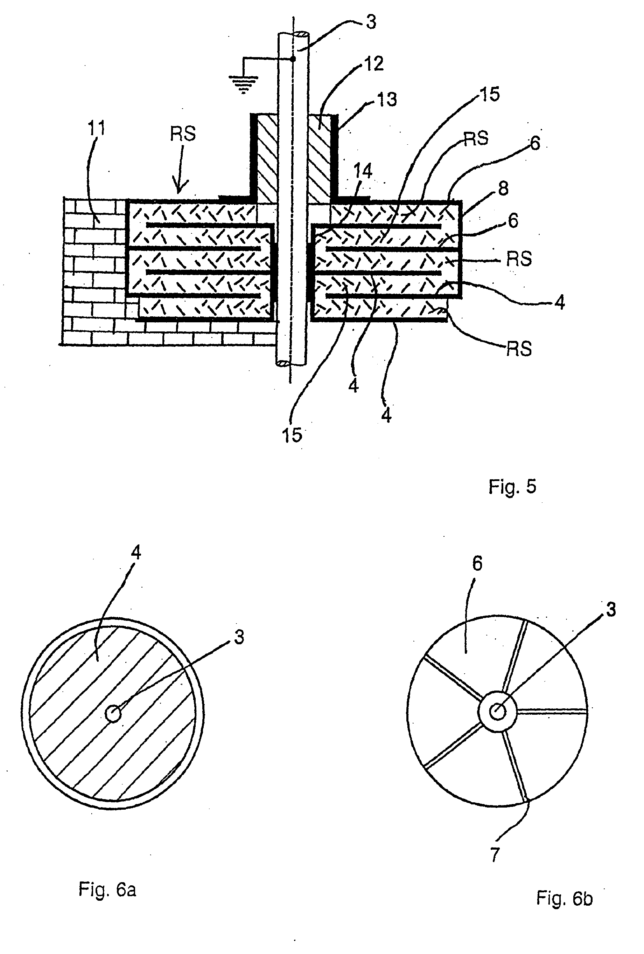

In den Fig. 5, 6a und 6b ist ein aus mehreren ersten Ringscheiben RS in Form eines Multi-Layer-Kondensators gebildetes Laminat gezeigt. Eine Trägerscheibe 11 ist der Übersichtlichkeit halber nur in der linken Hälfte der Abbildung angedeutet. Die Trägerscheibe 11 ist hier unmittelbar an der Welle 3 angebracht. Es ist selbstverständlich auch möglich, die Trägerscheibe 7 anders anzuordnen, sie insbesondere auch an einer Kollektorhülse 12 zu befestigen. Dabei sind aus einem dielektrischen Material hergestellte erste Ringscheiben RS übereinander gestapelt. Bei dem dielektrischen Material kann es sich um herkömmliche zur Herstellung von Multi-Layer-Kondensatoren geeignete Materialien handeln. In diesem Fall kann $R_C$ bei Bedarf z.B. durch Aufbringen von Elektroden mit resistiven Eigenschaften (ohmsche oder spannungsabhängige Charakteristik) gezielt eingestellt werden. Mit denselben Maßnahmen kann auch ein Vorwiderstand hergestellt werden. Auf der Oberseite der ersten Ringscheiben RS vorgesehene Elektrodenschichten 6 erstrekken sich jeweils bis an den Außenumfang der ersten Ringscheiben RS. An der Unterseite der ersten Ringscheiben RS vorgesehene Gegenelektrodenschichten 4 reichen nicht bis an den Außenumfang der ersten Ringscheiben RS. Sie erstrecken sich dagegen bis zum Innenumfang der ersten Ringscheiben RS. Die an der Oberseite der ersten Ringscheiben RS vorgesehenen Elektrodenschichten 6 sind in Fig. 6b nochmals schematisch gezeigt. Die Elektrodenschichten 6 sind mittels isolierender Streifen 7 voreinander getrennt, so dass hier fünf separate Elektrodenschichten 6 gebildet sind.

Die Elektrodenschichten 6 sind am Außenumfang der ersten Ringscheiben RS mittels der Leiterbahnen 8 elektrisch leitend miteinander verbunden. Die an der obersten Oberseite der ersten Ringscheiben RS befindlichen Elektrodenschichten 6 sind in einem radial innen liegenden Abschnitt mit Kommutatorlamellen 13 elektrisch leitend verbunden.

Die Gegenelektrodenschichten 4 reichen bis zum Innenumfang der ersten Ringscheiben RS und können dort über eine innere Kontaktierung 14 elektrisch leitend miteinander verbunden sein. Die innere Kontaktierung 14 kann wiederum mit der Welle 3 elektrisch leitend verbunden sein. Die Ausbildung der Gegenelektrodenschichten 4 ist in Fig. 6a gezeigt. Die Gegenelektrodenschichten 4 sind nicht segmentiert. Sie unterlagern weit gehend flächendeckend die gegenüberliegenden Elektrodenschichten 6. Sämtliche Elektrodenschichten 6 einer ersten Ringscheibe RS weisen also eine einzige Gegenelektrodenschicht 4 auf.

Die Elektrodenschichten 6 und die nicht segmentierten Gegenelektrodenschichten 4 sind im Laminat jeweils durch eine elektrisch isolierende Schicht 15 voneinander getrennt. Dabei kann es sich um eine dielektrische Kondensatormasse handeln. Es kann aber auch als isolierende Schicht 15 eine Kunststofffolie oder dgl. verwendet werden.

Bei der vorgeschlagenen Anordnung kann der Widerstand $R_C$ durch die Leitfähigkeit der Gegenelektrodenschichten 4 gezielt eingestellt werden. Es kann zur Herstellung der Gegenelektrodenschichten 4 eine Elektrode mit einer resistiven Charakteristik (ohmsches bzw. spannungsabhängiges Verhalten) eingesetzt werden, wobei zweckmäßigerweise $R_C$ im Bereich von 0,1 Ω bis 1 kΩ eingestellt wird.

Insbesondere die nach dem vorstehenden Ausführungsbeispiel vorgeschlagene erste Ringscheibe RS ermöglicht gegenüber dem Stand der Technik eine Steigerung der erzielbaren Kapazitäten um ein Vielfaches. Baut man z.B. auf einer hochfesten keramischen Trägerscheibe 11, die aus $CeO_2$ stabilisiertem $ZrO_2$ oder dgl. bestehen kann, mit einer Dicke von 0,4 mm einen Vielschicht-Kondensator aus einer dielektrischen Masse, z.B. X7R, Y5V, Z5U, COG, NPO und dgl. auf und nimmt für die aus der ersten Ringscheibe RS mit darauf aufgebrachten Elektroden- 6 und Gegenelektrodenschichten 4 gebildete Kondensator-Ringscheibe eine Dicke von 20 μm an, womit eine Spannungsfestigkeit von mehreren 100 V sicher gewährleistet ist, dann ergibt sich bei einem Außendurchmesser der ersten Ringscheibe RS von z.B. 16 mm und einem Innendurchmesser des Durchbruchs 10 von 3,5 mm und bei neun Teilwicklungen eines Elektrokleinmotors eine Fläche von 9 x 15 mm$^2$ der Elektrodenschichten 6. Unter Berücksichtigung einer Breite des isolierenden Streifens 7 von 1,0 mm zwischen den Elektrodenschichten 6 ergibt sich die aus der nachstehenden Tabelle ersichtliche Leistungsmatrix. Im angegebenen Fall beträgt die relative Dielektrizitätskonstante für das X7R-Dielektrikum $\varepsilon_r$ = 4.500, für das Y5V-Dielektrikum beträgt $\varepsilon_r$ = 7.500.

| Anzahl Schichten | Resultierende Dicke | X7R | Y5V |
|---|---|---|---|
| 1 | 0,42mm | 9 x 30nF | 9 x 45nF |
| 10 | 0,60mm | 9 x 300nF | 9 x 450nF |
| 20 | 0,80mm | 9 x 600nF | 9 x 900nF |
| 30 | 1,00mm | 9 x 900nF | 9 x 1.350nF |
| 55 | 1,50mm | 9 x 1.650nF | 9 x 2.475nF |
| 80 | 2,00mm | 9 x 2.400nF | 9 x 3.600nF |

Wie aus der Tabelle ersichtlich ist, kann mit einer ersten Ringscheibe RS mit einer Dicke von 2,0. mm Dicke eine Kapazität von 9 x 2.400nF bzw. 9 x 3.600nF erzielt werden. Derart große Kapazitäten werden aller Voraussicht nach für Elektrokleinmotoren nicht benötigt. Das Beispiel zeigt jedoch, dass prinzipiell alle gewünschten Kapazitäten im Bereich von Elektrokleinmotoren mit der ersten Ringscheibe RS erzeugt werden können. Das lässt eine erhebliche Reduzierung der elektromagnetischen Emissionen und eine Lebensdauerverlängerung von Elektrokleinmotoren erwarten. Mit den erfindungsgemäß realisierbaren hohen Kapazitäten kann eine besonders hohe Reduzierung der elektromagnetischen Emissionen erreicht werden, weil der Resonanzbereich des aus der Motorteilwicklung und der Kapazität gebildeten Schwingkreises in den Frequenzbereich von 150 kHz bis 150 MHz verschoben werden kann.

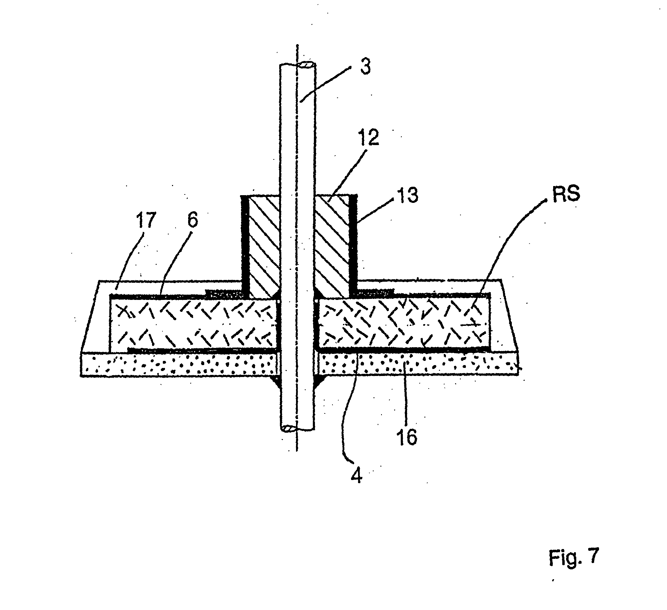

Bei der in Fig. 7 schematisch im Querschnitt gezeigten Kommutatoranordnung ist die erste Ringscheibe RS unterlagert von einer Varistor-Ringscheibe 16. Die Varistor-Ringscheibe 16 ist über die Gegenelektrodenschicht 4 elektrisch leitend verbunden mit der Kondensator-Ringscheibe. Mit 17 ist eine die stapelförmige Ringscheibenanordnung überdeckende Isolationsschicht bezeichnet, die z.B. aus einem Lack, einer Glaspaste oder dgl. hergestellt sein kann. Die Ringscheibenanordnung ist auch in diesem Fall mittels Löten, Kleben, Schrumpfen oder dgl. unmittelbar an der Welle 3 befestigt. Die auf der Oberseite der Ringscheibe RS vorgesehenen Elektrodenschichten 6 sind wiederum mit dem auf der Kommutatorhülse 12 angebrachten Kommutatorlamellen 13 elektrisch leitend verbunden.

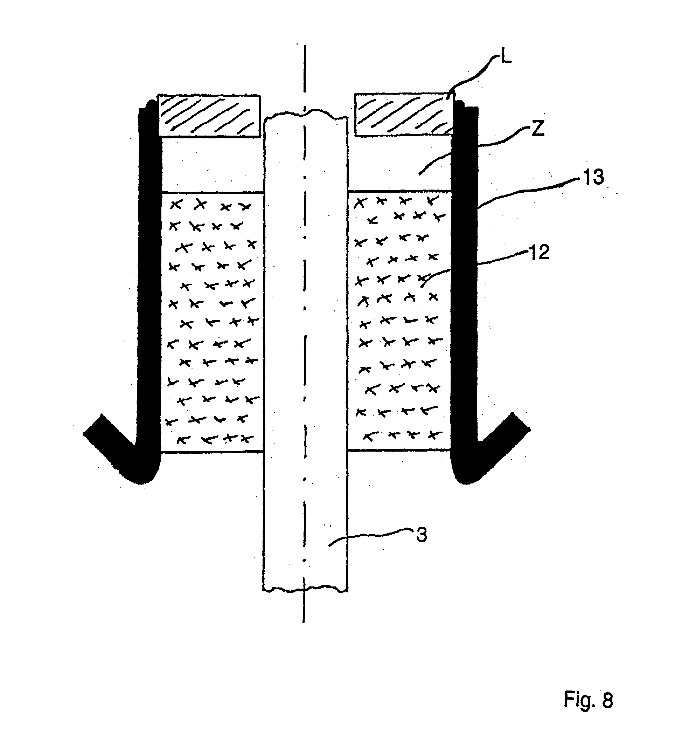

Fig. 8 zeigt eine Querschnittsansicht einer dritten Kommutatoranordnung. Dabei ist auf der Welle 3 die, vorzugsweise aus Kunststoff hergestellte, Kommutatorhülse 12 befestigt. Am Außenumfang der Kommutatorhülse 12 sind die Kommutatorlamellen 13 angebracht. Die Kommutatorlamellen 13 weisen am einen Ende eine hakenartige Umbiegung zum Durchführen eines Drahts der (hier nicht gezeigt) Motorwicklung. Am anderen Ende stehen die Kommutatorlamellen 13 über das Ende der Kommutatorhülse 12 hinaus. Ein mit dem Bezugszeichen L bezeichnetes Laminat, das beispielsweise aus mehreren Kondensator-Ringscheiben, ggf. in Verbindung mit einer Varistor- und/oder Widerstandsund/oder Induktivitäts-Ringscheibe, gebildet sein kann, ist mit den anderen Enden der Kommutatorlamellen 13 z.B. mittels eines Lots fest verbunden. Zwischen dem Laminat L und der Kommutatorhülse 12 bleibt ein Zwischenraum Z. Das Laminat L ist hier nicht mit der Welle 3 verbunden. Es bleibt ein geringer Abstand zwischen dem Innenumfang des Laminats L und der Welle 3. Die vorgeschlagene Kommutatoranordnung ist besonders platzsparend. Sie ermöglicht außerdem eine Kompensation der durch die unterschiedlichen Materialien bedingten Differenzen im Ausdehnungskoeffizienten. Das Laminat L hat sowohl eine axiale als auch eine radiale Bewegungsfreiheit. Auch bei erhöhter Betriebstemperatur ist die am Innenumfang der Kommutatorlamellen 13 vorgesehene Verbindung mit dem Laminat L gewährleistet. Es kann selbstverständlich auch sein, dass das Laminat L z.B. mittels von den überstehenden Enden der Kommutatorlamellen 13 sich erstreckenden (hier nicht gezeigten) Kontaktfedern gehalten wird. Solche Kontaktfedern können das Laminat L bis zu dessen Innenumfang hin umgreifen.

Nach einem besonders vorteilhaften (hier nicht gezeigten) Ausgestaltungsmerkmal kann zwischen den Ringscheiben RS, 11, 16 auch eine aus einem Polymer hergestellte Schicht vorgesehen sein. Diese Polymerschicht dient der Befestigung der übereinanderliegenden Ringscheiben RS, 11, 16. Sie verleiht der stapelförmigen Ringscheibenanordnung eine besonders hohe Festigkeit. Bei Vorsehen einer derartigen Polymer-Zwischenschicht, die z.B. aus einer beidseitig klebefähigen Folie gebildet sein kann, wird die Ringscheibenanordnung üblicherweise mittels Kleben an der Welle 3 befestigt. Besonders kostengünstig ist es, eine hochfeste, keramische, am Durchbruch 10 geeignet beschichtete Trägerscheibe 11 mittels Löten mit der Welle 3 zu verbinden. Auf die Trägerscheibe 11 können dann mehrere Ringscheiben RS, 16 in übereinander gestapelter Anordnung aufgeklebt werden. Die Ringscheiben RS, 16 werden an ihrem Außenumfang mit Leitkleber oder Leitlack kontaktiert. Anschließend wird die Anordnung mit einem isolierenden Lack überzogen.

Die Ringscheiben RS, 11 und 16 können mittels herkömmlicher Verfahren, z.B. Folienzieh-, Trockenpress-, Siebdruck- oder Nass-in-Nass-Verfahren in einer Dicke von etwa 0,005 bis 2,0 mm hergestellt werden. Eine aus mehreren übereinanderliegenden Ringscheiben RS, 11, 16 bestehendes Laminat kann somit in einer Dicke von insgesamt etwa 0,5 bis 2,0 mm hergestellt werden. Das Laminat weist eine sehr hohe Festigkeit auf. Das Vorsehen einer besonderen Träger-Ringscheibe 11 ist nicht unbedingt erforderlich. Das Laminat kann unmittelbar mittels Löten oder Kleben mit der Welle 3 verbunden werden. Mit dem erfindungsgemäßen Laminat sind hohe Kapazitäten und weitere, die Lebensdauer eines Kommutatorsystems verlängernde Eigenschaften realisierbar.

Bezugszeichenliste

1    Motorteilwicklung
2    Ringverbindung
3    Welle
4    Gegenelektrodenschicht
5    Brücke
6    Elektrodenschicht
7    isolierender Streifen
8    Leiterbahn
9    Ausnehmung

10   Durchbruch
11   Trägerscheibe
12   Kommutatorhülse
13   Kommutatorlamelle
14   innere Kontaktierung
15   isolierende Schicht
16   Varistor-Ringscheibe
17   Isolationsschicht

A, B, C   Bauelemente
C          Kapazität
$R_C$      Reihenwiderstand der Kapazität
$U_M$      elektromagnetische Kapazität
$L_M$      Motorinduktivität
$U_L$      Lamellenspannung
K          Kontaktpunkte
RS         erste Ringscheibe
$R_M$      Wicklungswiderstand
$U_N$      Motornennspannung
L          Laminat
Z          Zwischenraum

**Patentansprüche**

1.   Kommutatoranordnung für einen Elektrokleinmotor,
     mit einer mehrere Kondensatorelemente aufweisenden Kondensator-Ringscheibe,
     wobei die Kondensator-Ringscheibe aus einer dielektrischen ersten Ringscheibe (RS) gebildet ist,
     auf deren Oberseite mehrere sektorenförmig ausgebildete Elektrodenschichten (6) aufgebracht sind,
     wobei jede der Elektrodenschichten (6) jeweils mit einer Kommutatorlamelle (13) elektrisch leitend verbunden ist,
     und wobei auf einer der Oberseite gegenüberliegenden Unterseite Gegenelektroden der Kondensatorelemente
     vorgesehen sind,
     **dadurch gekennzeichnet, dass**
     auf der Unterseite eine einzige die Elektrodenschichten (6) weitgehend flächendeckend unterlagernde Gegenelektrodenschicht (4) vorgesehen ist, so dass die Gegenelektroden sämtlicher Kondensatorelemente auf demselben Potenzial liegen.

2.   Kommutatoranordnung nach Anspruch 1, wobei eine Mehrzahl der Kondensator-Ringscheiben unter Zwischenschaltung jeweils einer dielektrischen Schicht (15) nach Art eines Multi-Layer-Kondensators übereinander laminiert
     sind.

3.   Kommutatoranordnung nach einem der vorhergehenden Ansprüche, wobei die Kondensator-Ringscheiben so
     übereinander laminiert sind, dass die Elektrodenschichten (6) im Wesentlichen deckungsgleich übereinander liegen.

4.   Kommutatoranordnung nach einem der vorhergehenden Ansprüche, wobei die durch die übereinander liegenden
     Elektrodenschichten (6) gebildeten Kondensatorelemente zur Bildung eines kapazitiven Elements miteinander
     kontaktiert und jeweils mit einer Kommutatorlamelle (13) verbunden sind.

5.   Kommutatoranordnung nach einem der vorhergehenden Ansprüche, wobei die übereinander liegenden Elektrodenschichten (6) an einer äußeren Umfangsfläche der ersten Ringscheiben (RS) miteinander kontaktiert sind.

6.   Kommutatoranordnung nach einem der vorhergehenden Ansprüche, wobei die Gegenelektrodenschicht (4) kreisförmig ausgebildet ist und sich bis zu einem Innenumfang der ersten Ringscheibe (RS) erstreckt.

7.   Kommutatoranordnung nach einem der vorhergehenden Ansprüche, wobei die Gegenelektrodenschicht (4) als
     Widerstandsschicht mit einem Widerstand im Bereich von 0,1 Ω bis 1 KΩ ausgebildet ist.

8. Kommutatoranordnung nach einem der vorhergehenden Ansprüche, wobei jedem Kondensatorelement oder jedem kapazitiven Element in Reihe mindestens eine Induktivität vor- oder nachgeschaltet ist.

9. Kommutatoranordnung nach einem der vorhergehenden Ansprüche, wobei jedem Kondensatorelement oder jedem kapazitiven Element in Reihe mindestens eine diskrete Induktivität vor- oder nachgeschaltet ist.

10. Kommutatoranordnung nach einem der vorhergehenden Ansprüche, wobei eine aus einem hochpermeablen Magnetwerkstoff hergestellte zweite Ringscheibe vorgesehen ist, bei der jede der Induktivitäten durch eine darauf aufgebrachte leitfähige Struktur gebildet ist, und wobei die Kapazitäten jeweils mit einer der Induktivitäten elektrisch leitend verbunden sind.

11. Kommutatoranordnung nach einem der vorhergehenden Ansprüche, wobei jedem Kondensatorelement oder jeder Kapazität in Reihe mindestens ein Widerstand vor- oder nachgeschaltet ist.

12. Kommutatoranordnung nach einem der vorhergehenden Ansprüche, wobei der Widerstand eine nichtlineare U/I-Kennlinie aufweist.

13. Kommutatoranordnung nach einem der vorhergehenden Ansprüche, wobei die Widerstände einstückig in Form einer dritten Ringscheibe oder als auf eine Ringscheibe oder auf die Elektroden- (6) oder die Gegenelektrodenschicht (4) aufgebrachte weitere Widerstandsschicht ausgebildet sind.

14. Kommutatoranordnung nach einem der vorhergehenden Ansprüche, wobei die zweite und/oder die dritte Ringscheibe (16) bzw. Widerstandsschicht mit der/den Kondensator-Ringscheibe/n ein Laminat (L) bilden.

15. Kommutatoranordnung nach einem der vorhergehenden Ansprüche, wobei eine aus Keramik hergestellte Trägerscheibe (11) zur Aufnahme des Kondensators bzw. des Laminats (L) vorgesehen ist.

16. Kommutatoranordnung nach einem der vorhergehenden Ansprüche, wobei die Kondensator-Ringscheibe/n bzw. das Laminat (L) mit einer die Kommutatorlamellen (13) tragenden Kommutatorhülse (12) verbunden ist.

17. Kommutatoranordnung nach einem der vorhergehenden Ansprüche, wobei die Kondensator-Ringscheibe/n bzw. das Laminat (L) von den Kommutatorlamellen (13) umgeben ist.

18. Elektrokleinmotor mit einer Welle und einer darauf montierten Kommutatoranordnung nach einem der vorhergehenden Ansprüche.

Fig. 1

Fig. 2

Fig. 3

Fig. 4

Fig. 5

Fig. 6a

Fig. 6b

Fig. 7

Fig. 8